(19) **Europäisches Patentamt**
European Patent Office
Office européen des brevets

(11) **EP 1 617 182 B1**

(12) **EUROPÄISCHE PATENTSCHRIFT**

(45) Veröffentlichungstag und Bekanntmachung des Hinweises auf die Patenterteilung:
**21.10.2009 Patentblatt 2009/43**

(51) Int Cl.:
***G01D 5/347*** *(2006.01)* ***G01D 5/38*** *(2006.01)*

(21) Anmeldenummer: **05010388.6**

(22) Anmeldetag: **12.05.2005**

(54) **Positionsmesseinrichtung**

Position measuring device

Dispositif d'établissement de la position

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **16.07.2004 DE 102004035172**

(43) Veröffentlichungstag der Anmeldung:
**18.01.2006 Patentblatt 2006/03**

(73) Patentinhaber: **Dr. Johannes Heidenhain GmbH 83292 Traunreut (DE)**

(72) Erfinder: **Huber, Walter 83278 Traunstein (DE)**

(56) Entgegenhaltungen:
**EP-A- 1 028 309    EP-A- 1 081 457
US-A- 4 912 322    US-A- 5 428 445
US-A- 5 994 692**

**Beschreibung**

Die Erfindung betrifft eine Positionsmesseinrichtung nach dem Oberbegriff des Patentanspruchs 1.

Eine derartige Positionsmesseinrichtung zur Bestimmung der Relativlage zweier (durch eine Drehbewegung) entlang einer Messrichtung zueinander beweglicher Objekte (Winkelmesseinrichtung) umfasst eine auf einer ringartigen Maßverkörperung, z. B in Form eines Maßbandes, ausgebildete periodische Messteilung; eine Abtasteinheit zum optischen Abtasten der Messteilung mittels elektromagnetischer Strahlung (insbesondere mittels Licht), die in einer Beleuchtungseinrichtung (Lichtquelle) der Abtasteinheit erzeugt wird, wobei die Maßverkörperung und die Abtasteinheit entlang der Messrichtung relativ zueinander bewegbar sind; eine Abtastplatte der Abtasteinheit mit einer entlang einer Achse erstreckten, durch ein Abtastgitter gebildeten Abtastteilung, die im Strahlengang der zum Abtasten der Messteilung verwendeten elektromagnetischen Strahlung angeordnet ist, so dass diese elektromagnetische Strahlung sowohl mit der Abtastteilung als auch mit der Messteilung wechselwirkt; sowie einen Detektor der Abtasteinheit, dessen Detektorfläche zur Detektion einer nach Wechselwirkung mit der Abtastteilung und der Messteilung als Streifenmuster vorliegenden Intensitätsverteilung der elektromagnetischen Strahlung dient, um aus der Änderung der ortsabhängigen Phase der Intensitätsverteilung eine Relativbewegung der Messteilung bezüglich der Abtasteinrichtung erfassen zu können.

Indem eines der beiden Objekte, deren Relativbewegung mittels der Positionsmesseinrichtung bestimmt werden soll, mit der Messteilung und das andere Objekt mit der Abtasteinrichtung versehen wird, lässt sich aus der Erfassung der Relativbewegung der Abtasteinrichtung bezüglich der Messteilung unmittelbar auf die Relativbewegung der beiden Objekte zueinander schließen.

Das Messprinzip, das der vorgenannten Positionsmesseinrichtung zugrunde liegt, ist beispielsweise aus der EP 1 081 457 A2, der EP 1 028 309 A1 und der EP 0 754 933 B1 bekannt. So ist in der EP 1 028 309 A1 eine optische Positionsmesseinrichtung zur Bestimmung der Relativlage zweier entlang einer Messrichtung zueinander beweglicher Objekte beschrieben. Diese umfasst mindestens eine mit einem der beiden Objekte verbundene periodische Messteilung sowie eine mit dem anderen Objekt verbundene und somit relativ zu der Messteilung entlang der Messrichtung bewegbare Abtasteinheit. Die Abtasteinheit weist eine Lichtquelle, mindestens eine Abtastteilung sowie eine Detektoranordnung in einer Detektorebene auf, die aus mehreren strahlungsempfindlichen, in Messrichtung hintereinander angeordneten Detektorelementen besteht.

Wird bei einer Positionsmesseinrichtung der eingangs genannten Art ein als Träger der Messteilung dienendes Maßband ringartig angeordnet, insbesondere durch Aufbringen des Maßbandes auf einen zylindrischen Körper in Form einer Trommel, so kann die Positionsmesseinrichtung zur Winkelmessung verwendet werden. Alternativ kann die entsprechende Messteilung hierzu auch unmittelbar auf der Trommel selbst aufgebracht sein, so dass dann die mit der Messteilung versehene Trommeloberfläche unmittelbar die ringartig umlaufende Maßverkörperung bildet.

Im Folgenden soll bei der Verwendung des Begriffes "Maßband", sofern nicht ausdrücklich auf ein Maßband endlicher Dicke abgestellt wird, jeweils auch der Grenzfall umfasst sein, dass die Dicke des Maßbandes gegen Null geht: Dieser Grenzfall entspricht einer Situation, in der die Messteilung unmittelbar auf dem (zylindrischen) Körper (in Form einer Trommel) aufgebracht ist, der ansonsten zur Aufnahme des Maßbandes dient.

Bei einer solchen Anordnung besteht das Problem, dass die auf die Ebene der Abtastplatte projizierte lokale Teilungsperiode der auf der ringartig umlaufenden Maßverkörperung vorgesehenen periodischen Messteilung mit wachsendem Abstand vom Trommelscheitel nach außen hin abnimmt. Daraus ergibt sich eine nach außen hin anwachsende gegenseitige Verschiebung der Teilungsstriche der Abtastteilung einerseits und der Messteilung andererseits bezüglich deren Optimallage, die bei einer linearen periodischen Anordnung sowohl der Messteilung als auch der Abtastteilung vorläge. Die beschriebenen Abweichungen, die aus der ringartigen Anordnung der periodischen Messteilung folgen, führen zu einer Verschlechterung des Modulationsgrades der am Detektor erzeugten Abtastsignale.

Der Erfindung liegt das Problem zugrunde, eine Positionsmesseinrichtung der eingangs genannten Art zu schaffen, die bei einfachem Aufbau die Kombination einer ringförmigen Maßverkörperung und einer Abtastplatte sowie eines zugehörigen Detektors mit einer zweidimensionalen strahlungsempfindlichen Oberfläche bei guter Qualität der auszuwertenden Abtastsignale gestattet.

Dieses Problem wird erfindungsgemäß durch eine Positionsmesseinrichtung mit den Merkmalen des Patentanspruchs 1 gelöst.

Danach variiert die Gitterkonstante der Abtastteilung, also die lokale Periode der Abtastteilung, entlang der Erstreckungsrichtung der Abtastteilung derart, dass die Wegstrecken, auf denen die Phase der an der Detektorfläche vorliegenden Intensitätsverteilung, also des durch Interferenz erzeugten Streifenmusters (entlang der Messrichtung, entlang der die Detektorelemente des Detektors hintereinander angeordnet sind, und somit insbesondere auch parallel zur Erstreckungsachse der Abtastteilung) eine (lineare) Änderung um $2\pi$ durchläuft, konstant sind.

Mit anderen Worten ausgedrückt, nimmt die Phase (Vernierphase) in der durch die Detektionsfläche des Detektors definierten Detektionsebene - unabhängig davon, an welcher Stelle der Ebene die Änderung der Phase betrachtet wird - stets innerhalb einer vorgegebenen Länge bzw. Wegstrecke entlang (insbesondere der so genannten Vernierperiode) linear um $2\pi$ zu.

Die erfindungsgemäß vorgesehene Ausgestaltung der Abtastteilung hat den wesentlichen Vorteil, dass der Modulationsgrad und damit die Signalgrößen des Abtastsignals optimal eingestellt werden, da für beliebige Durchmesser der ringartig angeordneten Maßverkörperung die lokale Teilungsperiode (Gitterkonstante) der Abtastteilung entlang der Messrichtung, d. h. entlang der Erstreckungsachse der Abtastteilung, so bestimmt wird, dass die in der Ebene der Detektoroberfläche erzeugte Periode Intensitätsverteilung der elektromagnetischen Strahlung bzw. des Streifenmusters (Vernierperiode) hinsichtlich der Ausdehnung entlang der Messrichtung stets den gleichen, konstanten Wert aufweist. Hierdurch ist es möglich, für beliebige Durchmesser der ringartig umlaufenden Maßverkörperung, d. h. insbesondere für beliebige Durchmesser einer Trommel, auf der ein mit der Maßverkörperung versehenes Maßband aufgebracht ist, stets den gleichen strukturierten Detektor zur Detektion der elektromagnetischen Strahlung nach Wechselwirkung mit der Messteilung und der Abtastteilung zu verwenden.

Ein weiterer wichtiger Vorteil der erfindungsgemäßen Ausgestaltung der Abtastteilung besteht in der erhöhten Messgenauigkeit im Fall einer Verschmutzung der Messteilung, da in den Abtastsignalen als Folge der Verschmutzung keine Phasenverschiebungen sondern lediglich unterschiedliche Amplituden auftreten.

Die vorstehend am Beispiel solcher Positionsmesseinrichtungen erläuterte Erfindung, mit denen an der Detektorfläche ein periodisches, so genanntes Vernier-Streifenmuster erzeugt wird, lässt sich insbesondere auch in dem Fall anwenden, in dem die Periode des Streifenmusters gegen unendlich strebt. In diesem Fall wird eine einheitliche Hell-/Dunkel-Modulation mit konstanter Phase auf einem Abtastfeld erzeugt.

Bei linearen Positionsmesseinrichtungen, bei denen die Messteilung und die Abtastteilung parallel zueinander entlang einer Messrichtung verlaufen, entspricht ersteres einer Anordnung, bei der die Abtastteilung und die Messteilung eine unterschiedliche Teilungsperiode aufweisen, während der Grenzfall einer einheitlichen Hell-/Dunkel-Modulation konstanter Phase im linearen Fall einer identischen Teilungsperiode der Messteilung einerseits und der Abtastteilung andererseits entspricht.

Die erfindungsgemäß vorgesehene Variation der Gitterkonstante bzw. der lokalen Periode der Abtastteilung kann konstruktiv insbesondere dadurch realisiert werden, dass die Gitterkonstante der Abtastteilung von einem Referenzpunkt ausgehend in mindestens einer Raumrichtung entlang der Erstreckungsachse der Abtastteilung definiert variiert, insbesondere (kontinuierlich) abnimmt. Hierdurch wird der eingangs beschriebenen Abnahme der auf die Abtastplatte projizierten Messteilung entlang der Erstreckungsachse der Abtastteilung Rechnung getragen.

Die Anordnung ist dabei bevorzugt derart, dass die Gitterkonstante der Abtastteilung ausgehend von dem besagten Referenzpunkt in zwei zueinander entgegengesetzten, jeweils entlang der Erstreckungsachse der Abtastteilung (entgegengesetzt zueinander) verlaufenden Richtungen abnimmt, und zwar bevorzugt symmetrisch, d. h. die Abnahme ist - von dem Referenzpunkt ausgehend - entlang der beiden zueinander entgegengesetzten Raumrichtungen identisch.

Die ortsabhängige Gitterkonstante der Abtastteilung kann dabei aus einer ortsabhängigen Gitterphase der Abtastteilung bestimmt werden, die sich aus der auf die Abtastplatte projizierten, ortsabhängigen Gitterphase der Messteilung und einer vorgebbaren, periodischen Phase der an der Detektorfläche der Abtasteinheit vorliegenden Intensitätsverteilung ergibt.

Aus der ortsabhängigen Gitterphase der Abtastteilung lässt sich dann die ortsaufgelöste Frequenzverteilung der Abtastteilung berechnen, und zwar durch Ableitung der ortsabhängigen Gitterphase nach dem Ort sowie Division durch $2\pi$. Die ortsabhängige Frequenzverteilung bildet das Inverse der lokalen Gitterkonstante bzw. lokalen Teilungsperiode der Abtastteilung, so dass sich diese aus der Frequenzverteilung unmittelbar durch Bildung des Inversen berechnen lässt.

Die Detektorfläche des Detektors der Abtasteinheit wird bevorzugt durch eine periodische Anordnung von Detektorbereichen (entlang der Erstreckungsachse der Abtastteilung) gebildet, deren Periode auf die Periode desjenigen Streifenmusters abgestimmt ist, für deren Abtastung der entsprechende Detektor zur Erzielung einer maximalen Intensität der elektromagnetischen Strahlung an der strahlungsempfindlichen Oberfläche ausgebildet und vorgesehen ist. Im Falle eines periodisch strukturierten Detektors bedeutet dies insbesondere, dass die strahlungsempfindliche Oberfläche des Detektors eine Periode aufweist, die bis auf ein ganzzahliges Vielfaches mit der Periode des Streifenmusters übereinstimmt.

Unter der Periode des Detektors wird dabei nicht zwingend die Periode der geometrischen Anordnung der einzelnen Detektorbereiche bzw. Detektorelemente verstanden. Vielmehr ist hierbei auch eine elektrische Verschaltung der einzelnen Detektorbereiche bzw. Detektorelemente zu berücksichtigen. So ist bei einem strukturierten Detektor üblicherweise vorgesehen, dass auf einer Länge, die der Periode des an der strahlungsempfindlichen Oberfläche des Detektors empfangenen Streifenmusters entspricht, vier Detektorelemente angeordnet sind, von denen jedes einem bestimmten Phasenwert, insbesondere einer der Phasen 0°, 90°, 180° oder 270° zugeordnet ist. Hierbei werden dann mehrere Gruppen von jeweils vier Detektoren (entlang der Erstreckungsachse der Abtastteilung) hintereinander angeordnet, wobei aus den einzelnen Detektorgruppen jeweils die Detektorbereiche bzw. Detektorelemente miteinander verschaltet werden, die der gleichen Phase zugeordnet sind. Die Periode eines solchen strukturierten Detektors wird dann definiert durch die Breite jeweils einer Detektorgruppe, die mehrere Detektorbereiche, insbesondere vier Detektorbereiche, umfasst.

Bei Verwendung eines Detektors mit einer zweidimensionalen, ebenen strahlungsempfindlichen Oberfläche zur Abtastung der Messteilung auf der ringartigen Maßverkörperung erstreckt sich der Detektor in einem definierten (radialen) Abstand von der mit der Messteilung versehenen Oberfläche der Maßverkörperung in tangentialer Richtung (d. h., parallel zu einer Tangente am äußeren Umfang der ringartig ausgebildeten Maßverkörperung). Bei dem strukturierten Detektor sind dementsprechend die einzelnen Detektorbereiche bzw. Detektorelemente entlang einer Richtung parallel zu einer Tangentialen der ringförmigen Maßverkörperung hintereinander angeordnet.

In entsprechender Weise ist auch die Abtastplatte der Abtasteinheit parallel zu einer die Messrichtung repräsentierenden Tangente am äußeren Umfang der Maßverkörperung angeordnet, und zwar bevorzugt derart, dass die Abtastteilung der Abtastplatte sich parallel zu der Detektorfläche des Detektors erstreckt. Zwar kann der Detektor relativ zur Abtastplatte um eine in Messrichtung verlaufende Achse verkippt sein; jedoch erstrecken sich auch dann die Abtastteilung und die Anordnung der Detektorelemente beide in Messrichtung.

Diejenige Stelle der Abtastteilung, die den geringsten Abstand von der Messteilung aufweist, die also dem der Abtastteilung zugewandten Scheitelpunkt der Messteilung unmittelbar gegenüber liegt, bildet dabei den Referenzpunkt, von dem ausgehend die Gitterkonstante der Abtastteilung in zwei zueinander entgegengesetzten Richtungen parallel zur Erstreckungsachse der Abtastteilung (symmetrisch) variiert wird.

Zu beachten ist, dass sich die Erfindung nicht nur auf den Fall anwenden lässt, in dem die Messteilung auf einer äußeren Oberfläche (äußeren Ringfläche) eines Maßbandes vorgesehen ist, sondern auch in dem Fall, in dem die Messteilung auf der inneren Oberfläche (inneren Ringfläche) des Maßbandes ausgebildet ist.

Sowohl die Abtastteilung als auch die Messteilung können durch so genannte Amplitudengitter gebildet werden, die mit elektromagnetischer Strahlung (insbesondere Licht) derart wechselwirken, dass - entsprechend der Periode des jeweiligen Gitters - eine periodische Abfolge hellerer und dunkler Lichtbereiche erzeugt wird. Wird die Positionsmesseinrichtung im so genannten Reflektionsverfahren betrieben, so sind in dem entsprechenden Gitter jeweils Markierungen (z.B. Striche) von größerer und kleinerer Reflektivität im Hinblick auf die zum Abtasten verwendete elektromagnetische Strahlung (Licht) vorgesehen. Bei Anwendung des so genannten Durchlichtverfahrens unterscheiden sich die periodisch hintereinander angeordneten Markierungen (Striche) demgegenüber in der Durchlässigkeit für die zum Abtasten verwendete elektromagnetische Strahlung (Licht).

Die Abtastteilung kann zudem insbesondere als so genanntes MAP-Gitter ("Mixed Amplitude Phase"-Gitter) ausgebildet sein, wie zum Beispiel aus den Figuren 2a und 2b der EP 1 081 457 A2 bekannt. Die in diesem Fall vorzunehmende Berechnung der Gitterphase des Amplitudengitters wird weiter unten anhand eines Ausführungsbeispieles beschrieben werden. Alternativ kann die Abtastteilung auch durch ein Phasengitter gebildet werden. Ob ein Amplitudengitter, ein Phasengitter oder ein gemischtes Amplituden-/Phasengitter (MAP-Gitter) zum Einsatz kommt, hängt vom jeweiligen Design des Messsystems ab. Dabei spielen etwa die tolerierbaren Signalgrößen, die Toleranz bezüglich des Abtastabstandes und Kosten eine Rolle.

Zur Abtastung des Maßbandes wird im Rahmen der vorliegenden Erfindung bevorzugt kollimierte (parallelisierte) elektromagnetische Strahlung in Form von Licht verwendet.

Weitere Merkmale und Vorteile der Erfindung werden bei der nachfolgenden Beschreibung eines Ausführungsbeispieles anhand der Figuren deutlich werden.

Es zeigen:

Fig. 1a     eine schematische Darstellung eines Ausschnittes eines ringförmig angeordneten Maßbandes mit einer periodischen Messteilung sowie einer zugeordneten Abtasteinheit mit einer Abtastplatte und einem Detektor;

Fig. 1b     die strahlungsempfindliche Oberfläche des strukturierten Detektors der Abtasteinheit gemäß Figur 1a;

Fig. 2     eine grafische Darstellung der Ortsabhängigkeit der Gitterkonstante der auf der Abtastplatte vorgesehenen Abtastteilung;

Fig. 3a     die auf ein ebenes Maßband normierte Signalgröße des Abtastsignales des strukturierten Detektors in Abhängigkeit vom Radius des ringförmig angeordneten Maßbandes bei Verwendung einer äquidistanten Abtastteilung;

Fig. 3b     die Signalgröße des Abtastsignales des strukturierten Detektors in Abhängigkeit vom Radius des ringförmig angeordneten Maßbandes bei Verwendung einer Abtastteilung mit einer ortsabhängigen Gitterkonstante.

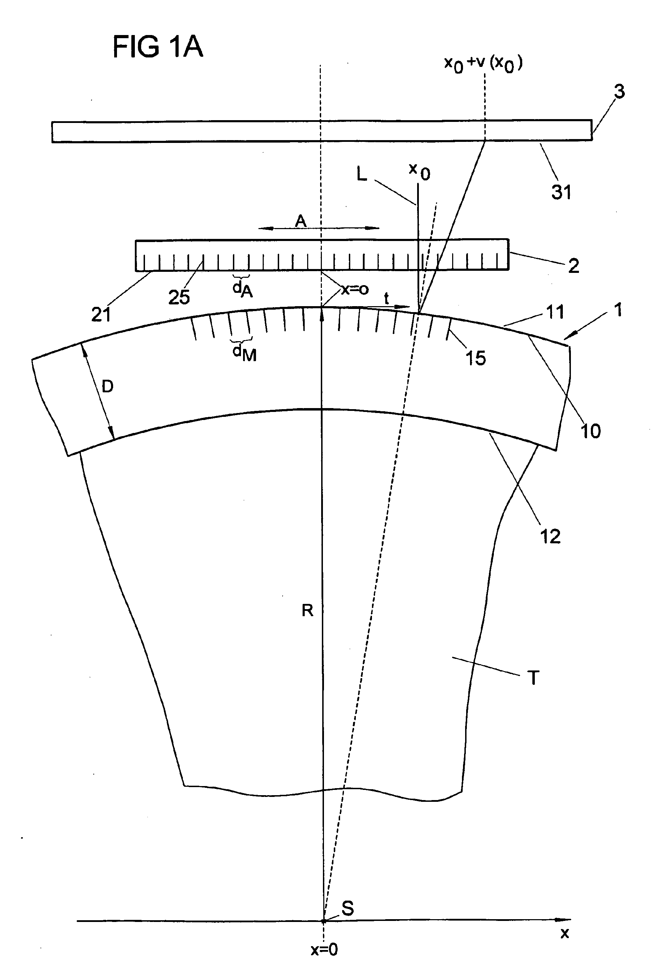

Figur 1a zeigt schematisch eine Positionsmesseinrichtung zur Winkelmessung mit einem ringförmig entlang eines Kreisbogens angeordneten Maßbands 1 endlicher Dicke und eine Abtasteinheit, die eine in Figur 1a nicht dargestellte Lichtquelle, eine Abtastplatte 2 und einen Detektor 3 in Form eines Fotodetektors umfasst.

**EP 1 617 182 B1**

Das Maßband 1 und die Abtasteinheit 2, 3 sind relativ zueinander beweglich, z. B. dadurch, dass das Maßband 1 am äußeren Umfang einer um eine Achse S drehbaren Trommel T festgelegt ist und die Abtasteinheit 2, 3 stationär vor der äußeren Oberfläche (äußeren Ringfläche) des Maßbandes 1 (und von dieser in radialer Richtung beabstandet) angeordnet ist.

Das ringförmig entlang eines Kreisbogens 10 mit dem Radius R angeordnete Maßband 1 weist eine mit einer periodischen Messteilung 15 in Form einer Strichteilung versehene äußere Ringfläche 11 sowie eine innere Oberfläche 12 (innere Ringfläche) auf. Alternativ kann die periodische Messteilung 15 auch unmittelbar auf der äußeren Oberfläche der um die Achse S drehbaren Trommel T vorgesehen sein. In diesem Fall bildet also die äußere Oberfläche der Trommel die Ringfläche 11, auf der die Messteilung 15 ausgebildet ist.

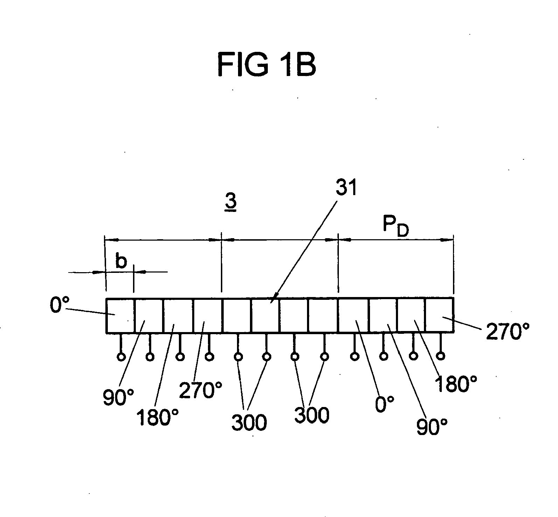

Eine dem Maßband 1 zugeordnete Abtastplatte 2 der Abtasteinheit 2, 3 ist vor der äußeren Ringfläche 11 des Maßbandes und von dieser beabstandet angeordnet und zwar in der Weise, dass sie sich parallel zu einer Tangente t an der äußeren Ringfläche 11 des Maßbandes 1 erstreckt. Da das Maßband 1 eine gewisse Ausdehnung senkrecht zur Ringebene, also senkrecht zu der Zeichenebene der Figur 1 a, aufweist, handelt es sich bei dieser Tangente t nicht einfach um eine Gerade, sondern vielmehr um eine Tangentialebene.

Die Abtastplatte 2 ist an ihrer der äußeren Ringfläche 11 des Maßbandes 1 zugewandten Oberfläche 21 mit einer Abtastteilung 25 versehen. Die der äußeren Ringfläche 11 zugewandte Oberfläche 21 der Abtastplatte 2 sowie die dort ausgebildete Abtastteilung 25 erstrecken sich dabei jeweils entlang einer Achse A parallel zu der Tangente t an der äußeren Ringfläche 11 des Maßbandes 1.

Von dem Maßband 1 her gesehen ist hinter der Abtastplatte 2 ein Detektor 3 mit einer strahlungsempfindlichen Oberfläche 31 (Detektorfläche) angeordnet, bei dem es sich um einen sogenannten strukturierten Fotodetektor handelt. Dessen strahlungsempfindliche Oberfläche wird gemäß Figur 1b gebildet durch eine Mehrzahl hintereinander angeordneter Detektorelemente in Form von Fotoelementen einer Breite b. Die Richtung, entlang der die Detektorelemente hintereinander angeordnet sind, entspricht dabei der Erstreckungsachse A der Abtastteilung 25 aus Figur 1a. D. h., die Abtastteilung 25 der Abtastplatte 2 sowie die hintereinander angeordneten Detektorelemente des Detektors 3 erstrecken sich parallel zueinander, nämlich parallel zur Erstreckungsachse A, welche wiederum parallel zu der Tangente t an der äußeren Ringfläche 11 des Maßbandes 1 verläuft und welche der Messrichtung an der Abtasteinheit 2, 3 entspricht.

Dabei bilden jeweils vier Detektorelemente des Detektors 3 eine Detektorgruppe, und es sind die vier Detektorelemente einer Detektorgruppe jeweils einem der vier Phasenwerte 0°, 90°, 180° und 270° zugeordnet. Somit entspricht die Periode $P_D$ dieser Anordnung von Detektorelementen dem Vierfachen der Breite b eines einzelnen Detektorelementes des Phasenwertes 0°, 90°, 180° oder 270°.

In Figur 1b sind ferner schematisch elektrische Anschlüsse 300 der einzelnen Fotoelemente dargestellt, die die strahlungsempfindliche Oberfläche 31 des Fotodetektors 3 bilden, wobei jeweils dem selben Phasenwert 0° oder 90° oder 180° oder 270° zugeordnete Fotoelemente unterschiedlicher Detektorgruppen miteinander verschaltet sind, so dass deren Ausgangssignale zur Auswertung gemeinsam einer Auswerteeinheit zugeführt werden können.

Von der strahlungsempfindlichen Oberfläche 31 des Fotodetektors 3 sind in Figur 1 b drei Detektorgruppen bestehend aus jeweils vier Detektorelementen (Fotoelementen) der Phase 0° bzw. 90° bzw. 180° bzw. 270° dargestellt. Hierbei handelt es sich nur um einen Ausschnitt der strahlungsempfindlichen Oberfläche 31 des Fotodetektors 3, die typischerweise zehn bis vierzehn derartige aus jeweils vier Fotoelementen bestehender und periodisch hintereinander angeordneter Detektorgruppen aufweist.

Die Abtasteinheit 2, 3 der in den Figuren 1 a und 1 b dargestellten Positionsmesseinrichtung (Winkelmesseinrichtung) dient zur optischen Abtastung der Messteilung 15 auf der äußeren Ringfläche 11 des ringförmig entlang eines Kreisbogenabschnittes 10 angeordneten Maßbandes 1. Hierzu wird die mit der Messteilung 15 versehene äußere Ringfläche 11 des Maßbandes 1 in bekannter Weise mit kollimierter elektromagnetischer Strahlung L in Form von Licht bestrahlt, welches mittels einer geeigneten Beleuchtungseinheit (Lichtquelle) erzeugt und mittels einer geeigneten Kondensorlinse kollimiert wurde, wie beispielsweise aus der EP 1 081 457 A2 bekannt. Das zur Abtastung der Messteilung 15 auf der äußeren Ringfläche 11 des Maßbandes 1 verwendete Licht L wechselwirkt sowohl mit der Abtastteilung 25 der lichtdurchlässigen Abtastplatte 2, die in bekannter Weise im Strahlengang des Lichtes L liegt, als auch mit der Messteilung 15 auf der äußeren Ringfläche 11 des Maßbandes 1, an der das Licht reflektiert wird.

Die sowohl durch die Abtastteilung 25 als auch durch die Messteilung 15 modifizierten Lichtstrahlen L bilden auf der strahlungsempfindlichen Oberfläche 31 des Fotodetektors 3 ein sogenanntes Vernier-Streifenmuster mit einer Periode, die durch die Gitterkonstante $d_A$ der Abtastteilung 25 sowie die Gitterkonstante $d_M$ der Messteilung 15 festgelegt ist. Im Fall einer ortsunabhängigen Gitterkonstante, wie sie vorliegend insbesondere im Fall der Messteilung 15 des Maßbandes 11 vorliegt, entspricht die Gitterkonstante $d_M$ zugleich der Periode der entsprechenden Teilung.

Die auf der strahlungsempfindlichen Oberfläche 31 des Fotodetektors 3 angeordneten Fotoelemente erzeugen ein diesem Streifenmuster entsprechendes elektrisches Signal, welches einer Auswerteeinheit zugeführt wird, die durch Auswertung der elektrischen Ausgangssignale des Fotodetektors 3 das Ausmaß einer Relativbewegung zwischen Maßband 1 und Abtasteinheit 2, 3 ermittelt.

Im Vergleich zu einer auf einem linearen Maßstab vorgesehenen Messteilung besteht vorliegend aufgrund der ringförmigen Anordnung der Messteilung 15 entlang einer Kreisbahn das Problem, dass die Gitterkonstante d(x) der entlang der Richtung der kollimierten Lichtstrahlen L auf die zugewandte Oberfläche 21 der Abtastplatte 2 projizierten Messteilung 15 variiert. Dies soll nachfolgend näher beschrieben werden anhand einer Koordinatenachse x, die parallel zu der Tangente t der äußeren Ringfläche 11 des Maßbandes 1 sowie parallel zu der Erstreckungsachse A der Abtastteilung 15 der Abtastplatte 2 verläuft.

Mit x = 0 wird dabei derjenige Punkt bezeichnet, an dem die äußere Ringfläche 11 des Maßbandes 1 und somit die Messteilung 15 den geringsten Abstand (in radialer Richtung R) von der zugewandten Oberfläche 21 der Abtastplatte 2 und damit der Abtastteilung 25 haben. Der Punkt mit der Koordinate x = 0 wird nachfolgend auf dem Maßband 1 als Scheitelpunkt bezeichnet und auf der Abtastplatte 2 als Referenzpunkt.

Anhand Figur 1 a wird dann deutlich, dass bei einer Projektion der Messteilung 15 auf die zugewandte Oberfläche 21 der Abtastteilung 2 die Gitterkonstante d(x) der auf die besagte Oberfläche 21 projizierten Messteilung 15 vom Referenzpunkt (x = 0) der Abtastplatte 2 ausgehend in zueinander entgegengesetzten Richtungen x, -x (parallel zur Erstreckungsachse A der Abtastteilung 25) nach außen hin (weg von dem Referenzpunkt) immer kleiner wird. Die Gitterkonstante d(x) der auf die zugewandte Oberfläche 21 der Abtastplatte 2 projizierten Messteilung 15 fällt somit vom Referenzpunkt (x = 0) der Abtastplatte 2 ausgehend nach außen hin, also entlang der entgegengesetzten Richtungen x, -x, jeweils kontinuierlich ab.

Die mit der ringförmigen Anordnung der Messteilung 15 verbundene Problematik kann auch anhand der Reflektion der kollimierten Lichtstrahlen L nach dem Auftreffen auf die äußere Ringfläche 11 des Maßbandes 1 dargestellt werden:

Wie weiter oben bereits erläutert, wechselwirken die Lichtstrahlen L eines kollimierten Strahlungsbündels mit der Abtastteilung 2, wodurch ein Interferenzstreifenmuster in der gekrümmten Ebene der ringförmig angeordneten Messteilung 15 erzeugt wird. Diese durch ein Interferenzstreifen- bzw. Intensitätsmuster charakterisierte Strahlung tastet die Messteilung 15, die als Amplitudengitter mit äquidistanten Strichen (also ortsunabhängiger Gitterkonstante $d_M$) ausgebildet ist, ab. Durch das Zusammenwirken der Abtastteilung 25 mit der Trommelteilung 15 entsteht in der durch die strahlungsempfindliche Oberfläche 31 (Detektionsfläche) des Detektors 3 definierten Detektionsebene ein Vernier-Streifenmuster, das durch die als Fotoelemente ausgebildeten Detektorelemente des Detektors 3 erfasst und in einer zugeordneten Auswerteeinheit ausgewertet wird. Dabei führt ein Lichtstrahl L, der an einer Stelle mit der Koordinate $x_0$ die Abtastteilung 2 durchdringt und anschließend an der mit der Messteilung 15 versehenen äußeren Ringfläche 11 des Maßbandes 1 reflektiert wird, anschaulich gesprochen zu einem Signal an der strahlungsempfindlichen Oberfläche 31 des Detektors 3 an einer Stelle $x_0 + v(x_0)$, die um einen Wert $v(x_0)$ gegenüber der Position im Fall einer linearen Anordnung des Maßbandes 11 verschoben ist. Die jeweilige ortsabhängige Verschiebung v(x) lässt sich für jede Stelle x aus der geometrischen Anordnung der Komponenten der beschriebenen Messeinrichtung zueinander berechnen.

Die vorstehend anhand Figur 1a ausgeführte qualitative Darlegung soll dabei lediglich eine anschauliche Darstellung des Problems liefern, das mit dem weiter oben besprochenen Projektionseffekt (als Folge der Projektion der Messteilung 15 des Maßbandes 1 auf die zugewandte Oberfläche 21 der Abtastteilung 2) verbunden ist. Tatsächlich muss natürlich bei einer konkreten quantitativen Betrachtungsweise die Wellennatur des mit den beiden Teilungen 15, 25 wechselwirkenden Lichtes berücksichtigt werden. Dies wird nachfolgend geschehen.

Folge des vorstehend beschriebenen Projektionseffektes ist in jedem Fall, dass bei einer äquidistanten Anordnung sowohl der Teilungsstriche der Messteilung 15 als auch der Teilungsstriche der Abtastteilung 25 kein Streifenmuster (Intensitätsmuster) konstanter Periode an der strahlungsempfindlichen Oberfläche 31 des Detektors 3 erzeugt wird. Dies führt zu Einbußen hinsichtlich der Signalgröße der vom Detektor 3 erzeugten und einer Auswerteeinheit zuzuführenden Abtastsignale, wenn die strahlungsempfindliche Oberfläche 31 des Detektors 3 in üblicher Weise durch eine periodische Anordnung von Fotoelementen gleicher Breite b (vergleiche Figur 1 b) gebildet wird.

Zur Beseitigung dieses Nachteils ist vorliegend auf der der Messteilung 15 zugewandten Oberfläche 21 der Abtastplatte 2 eine Abtastteilung 25 mit einer ortsabhängigen Abtastteilung $d_A$ vorgesehen, wobei die lokale, ortsabhängige Gitterkonstante $d_A(x)$ der Abtastteilung 25 so berechnet wird, dass das Zusammenwirken der Messteilung 15 mit der Abtastteilung 25 in der Ebene der strahlungsempfindlichen Oberfläche 31 des Detektors 3 zu einem Streifen- bzw. Intensitätsmuster mit konstanter Periode führt. D. h., entlang der Erstreckungsachse A der Abtastteilung 25 betrachtet, entspricht eine Änderung der Phase des Streifenmusters (Vernier-Phase) um $2\pi$ (Vernier-Periode) jeweils ein und derselben Wegstrecke entlang der Erstreckungsachse A bzw. der x-Achse des in Figur 1a eingeführten Koordinatensystems.

Wenn nachfolgend von der ortsabhängigen Gitterkonstanten $d_A(x)$ der Abtastteilung gesprochen wird, so bezieht sich diese Gitterkonstante zunächst beispielhaft auf ein Amplitudengitter oder Phasengitter mit Phasentiefe $\pi/2$. Wird ein MAP-Gitter oder ein Phasengitter mit Phasentiefe $\pi$ eingesetzt, so gilt:

$$d_A(x)[MAP-Gitter] = d_A(x)[Phasengitter\ mit\ Phasentiefe\ \pi] = 2 \cdot d_A(x)[Amplitudengitter]$$

Die mathematische Formulierung der Berechnung der Ortsabhängigkeit der Gitterkonstanten $d_A$ (x) der Abtastteilung 2 geht aus von der Ortsabhängigkeit der auf die zugewandte Oberfläche 21 der Abtastplatte 2 projizierten ortsabhängigen Gitterkonstante d(x) der Messteilung 15:

$$d(x) = d_M \cdot \left(1 + \frac{D}{2 \cdot R}\right)\left[1 - \frac{1}{2} \cdot \left(\frac{x}{R}\right)^2\right],$$

wobei $d_M$ die ortsunabhängige Gitterkonstante (konstante Teilungsperiode) der Messteilung 15 unmittelbar auf dem Maßband bezeichnet und R den Radius der ringförmigen Maßbandanordnung angibt, also den Abstand zwischen der äußeren Ringfläche 11 des Maßbandes 1 und der Drehachse S der Trommel sowie des hierauf angeordneten Maßbandes 1, und D für die Dicke des Maßbandes 1 steht.

Die vorliegende mathematische Herleitung beruht auf einer quadratischen Näherung, die für viele Anwendungen völlig ausreicht In anderen Fällen muss exakt gerechnet werden, d. h. mit der Abhängigkeit der projizierten Gitterkonstanten von dem lokalen Neigungswinkel der Oberfläche 21 gemäß einer Kosinus-Funktion.

Es ergibt sich für die ortsabhängige Gitterphase der projizierten Messteilung, die als das mit $2.\pi$ multiplizierte, integrierte Inverse der ortsabhängigen projizierten Gitterkonstante d(x) der Messteilung 15 berechnet wird:

$$\xi(x) = 2\pi \frac{1}{\left[d_M\left(1 + \frac{D}{2 \cdot R}\right)\right]}\left[\int \frac{1}{1 - \frac{1}{2} \cdot \left(\frac{x}{R}\right)^2} dx\right]$$

und schließlich durch Ausführung der Integration

$$\xi(x) = 2 \cdot \frac{\pi}{d_M\left(1 + \frac{1}{2} \frac{D}{\cdot R}\right)} \cdot R \cdot \sqrt{2} \cdot ar\tanh\left(\frac{1}{2} x \frac{\sqrt{2}}{R}\right).$$

Weiterhin sei angenommen, dass für die Vernier-Periode A des auf der strahlungsempfindlichen Oberfläche 31 (Detektorfläche) des Detektors 3 erzeugten Vernier-Streifenmusters ein definierter, vorgebbarer Wert angestrebt wird, der sich aus der in Figur 1b dargestellten Periodizität der Anordnung der Detektorelemente (Fotoelemente) des Detektors 3 ergibt. Unter Vorgabe eines definierten Wertes für A beträgt die ortsabhängige Vernier-Phase an der strahlungsempfindlichen Oberfläche 31 (Detektorfläche) des Detektors 3:

$$\Phi_V(x) = \frac{-2 \cdot \pi}{\Lambda} \cdot \left[x + \left(z_s + \frac{x^2}{2 \cdot R}\right) \cdot \tan\left(\frac{2.x}{R}\right)\right],$$

wobei $z_s$ den senkrechten Sensorabstand bei x = 0 bezeichnet, also den kürzesten Abstand des Detektors 3 von der Messteilung 15.

Aus der oben angegebenen ortsabhängigen Gitterphase der auf die zugewandte Oberfläche 21 der Abtastteilung 2 projizierten Messteilung 15 sowie aus der ebenfalls vorstehend angegebenen ortsabhängigen Vernier-Phase (unter Berücksichtigung der vorgegebenen Vernierperiode A sowie des vorgegebenen Sensorabstandes $z_s$) des an der strahlungsempfindlichen Oberfläche 31 des Detektors 3 vorliegenden Vernier-Streifenmusters ergibt sich für die Gitterphase der durch eine Amplitudenstruktur gebildeten Abtastteilung:

$$\phi(x) = \Phi_v(x) + \xi(x).$$

Hieraus lässt sich die sogenannte örtliche Frequenzverteilung der Amplitudenstruktur der Abtastteilung berechnen als:

$$g_A(x) = \frac{1}{2 \cdot \pi} \cdot \frac{d}{dx} \phi(x).$$

Das Inverse dieser Frequenzverteilung $g_A(x)$ ergibt dann die zu berechnende ortsabhängige Gitterkonstante $d_A(x)$ der Abtastteilung.

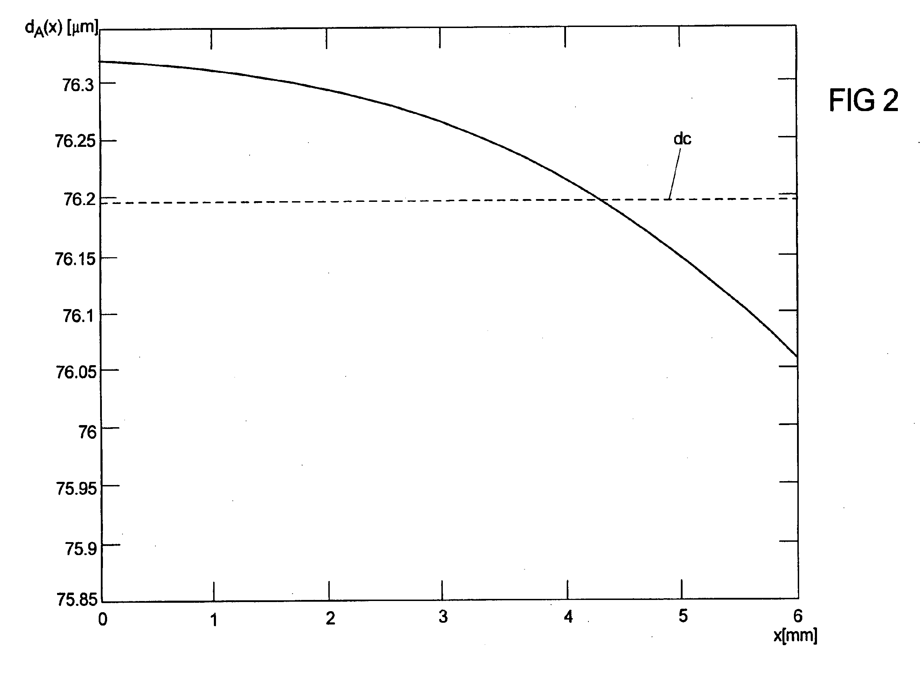

Figur 2 zeigt die ortsabhängige Gitterkonstante $d_A(x)$ einer Abtastteilung in Form eines MAP-Gitters in Abhängigkeit vom Abstand x vom Referenzpunkt der Abtastteilung, also desjenigen Punktes, an dem die Abtastteilung den geringsten Abstand von der Messteilung aufweist. Die Messteilung ist gemäß dem dargestellten Beispiel auf einem Maßband aufgebracht, welches um eine Trommel mit einem Trommeldurchmesser von 40 mm gelegt ist, und sie weist eine Gitterkonstante bzw. Periode von 40 $\mu$m auf. Die Vernier-Wellenlänge A beträgt vorliegend 800 $\mu$m.

Anhand Figur 2 ist erkennbar, dass die Gitterkonstante $d_A(x)$ des MAP-Gitters der Abtastteilung in Form eines Abtastgitters am Referenzpunkt ihren maximalen Wert annimmt und dann mit zunehmendem Abstand vom Referenzpunkt kleiner wird. Im linearen Fall, das heißt im Fall einer linear erstreckten Messteilung, anstelle einer ringförmig um eine Trommel gelegten Messteilung, läge die Gitterkonstante der Abtastteilung zwischen dem maximalen und dem minimalen Wert, wie in Figur 2 anhand der gestrichelten Linie $d_c$ schematisch angedeutet. Die Änderung der Gitterkonstante $d_A(x)$ entlang der Erstreckungsachse A der Abtastteilung beträgt dabei deutlich weniger als 1 % (sogar weniger als 0,5%) und stellt somit nur eine kleine Korrektur an der grundsätzlich periodischen Struktur der Abtastteilung dar, so dass wegen der geringen (kontinuierlichen) Variation der Gitterkonstante $d_A(x)$ in der Umgebung jedes Punktes x zumindest eine lokale Periode der Abtastteilung definiert werden kann.

Der in Figur 2 dargestellte Abfall der Gitterkonstante vom Referenzpunkt (Null-Punkt) gilt für beide Richtungen entlang der Erstreckungsachse A der Abtastteilung in gleicher Weise, also sowohl entlang positiver Richtung +x als auch entlang der entgegengesetzten Richtung -x.

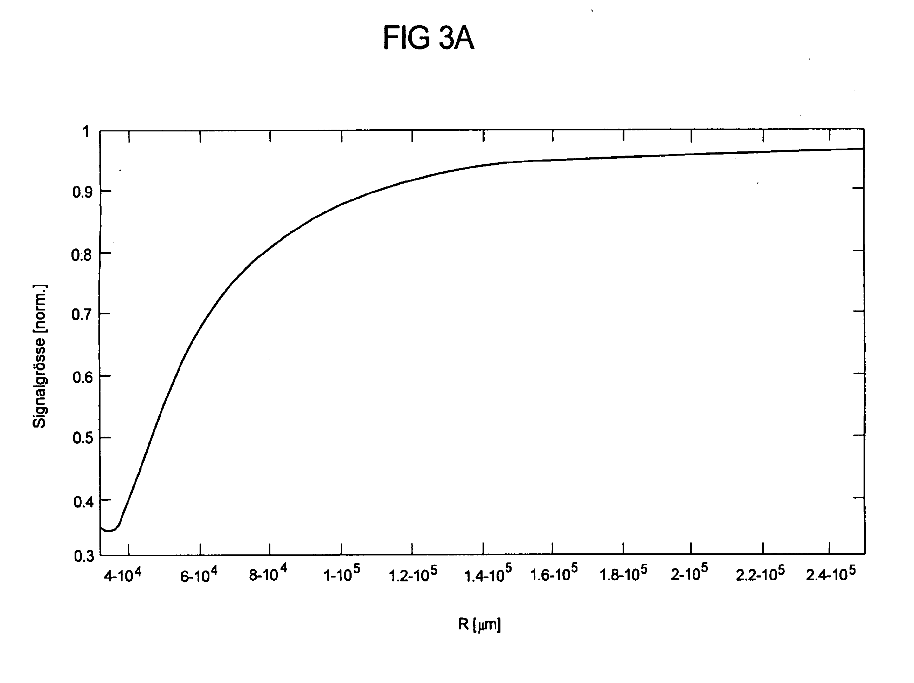

Ohne die vorstehend quantitativ beschriebene und in Figur 2 grafisch dargestellte Ortsabhängigkeit der Gitterkonstante der Abtastteilung würde die Vernier-Periode an der Detektorfläche des Detektors mit wachsendem Abstand von demjenigen Punkt mit dem geringsten Abstand von der Trommel variieren, mit der Folge einer erheblichen Reduzierung der Größe des am Detektor erzeugten Signals für kleine Trommelradien, wie in Figur 3a dargestellt.

Figur 3a zeigt die auf 1 als Maximalwert - der sich bei Verwendung einer ebenen Messteilung ergibt - normierte Größe der am Detektor erzeugten Signale in Abhängigkeit vom Trommelradius R bei einer äquidistanten Abtastteilung, d. h. ohne die erfindungsgemäß vorgesehene Korrektur (Ortsabhängigkeit) der Gitterkonstante. Es wird deutlich, dass bei Trommelradien von weniger als 100 mm die Signaleinbußen erheblich sind.

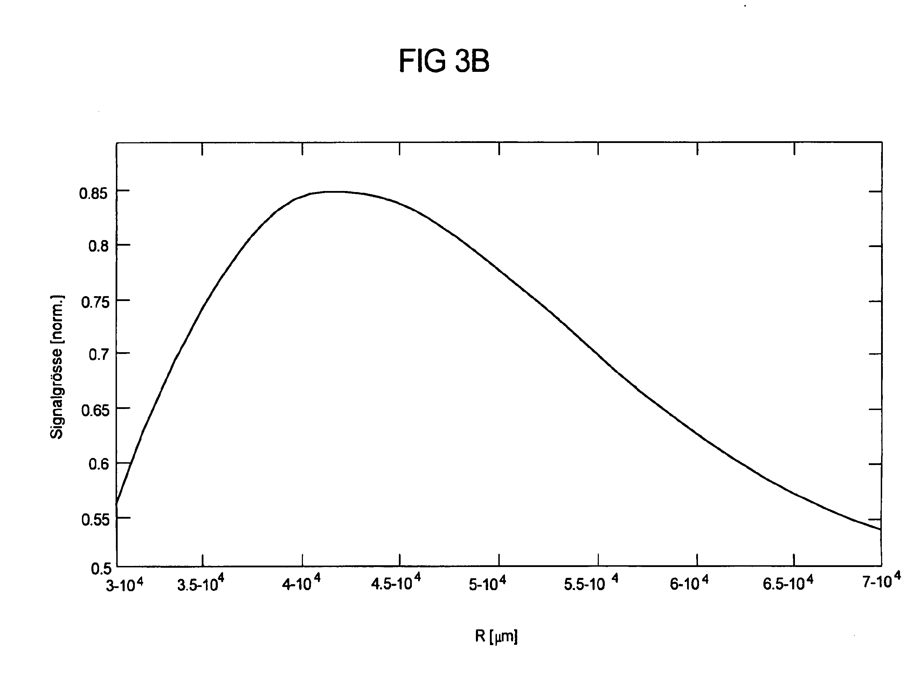

Abbildung 3b zeigt die Signalgröße in Abhängigkeit vom Trommelradius R im Fall einer Optimierung der Gitterkonstanten des Abtastgitters für einen Trommelradius R = 40 mm. Hier weist die Signalgröße bei genau diesem Trommelradius R ein Maximum auf und liegt bei über 85% der maximal möglichen Signalgröße.

## Patentansprüche

1. Positionsmesseinrichtung mit

   - einer auf einer ringartig umlaufenden Maßverkörperung vorgesehenen Messteilung,
   - einer Abtasteinheit zum optischen Abtasten der Messteilung mittels elektromagnetischer Strahlung,
   - einer Abtastplatte der Abtasteinheit mit einer entlang einer Achse erstreckten, durch ein Abtastgitter gebildeten Abtastteilung, die im Strahlengang der zum Abtasten der Messteilung verwendeten elektromagnetischen Strahlung angeordnet ist, so dass diese sowohl mit der Abtastteilung als auch mit der Messteilung wechselwirkt, und
   - einem Detektor der Abtasteinheit, dessen Detektorfläche zur Detektion der nach Wechselwirkung mit der Abtastteilung und der Messteilung als Streifenmuster vorliegenden Intensitätsverteilung der elektromagnetischen Strahlung dient, um Bewegungen der Maßverkörperung relativ zu der Abtasteinheit zu erfassen, wobei die Detektorfläche (31) des Detektors (3) durch eine periodische Anordnung von Detektorbereichen gebildet wird, die entlang einer Detektorachse hintereinander angeordnet sind und deren Periode ($P_D$) auf die Periode desjenigen Streifenmusters abgestimmt ist, für dessen Detektion der Detektor (3) ausgebildet ist,

**dadurch gekennzeichnet,**
**dass** die Gitterkonstante ($d_A$) der Abtastteilung (25) entlang der Erstreckungsrichtung (A) der Abtastteilung (25) derart variiert, dass die Wegstrecken, auf denen die Phase des an der Detektorfläche (31) vorliegenden Streifenmusters eine Änderung um 2π durchläuft, konstant sind.

2. Positionsmesseinrichtung nach Anspruch 1, **dadurch gekennzeichnet, dass** die Gitterkonstante ($d_A$) der Abtastteilung (25) von einem Referenzpunkt (0) ausgehend in mindestens einer Raumrichtung (x, -x) entlang der Erstreckungsachse (A) der Abtastteilung (25) gemäß einer definierten Funktion variiert.

3. Positionsmesseinrichtung nach Anspruch 1 oder 2, **dadurch gekennzeichnet, dass** die Gitterkonstante ($d_A$) der Abtastteilung (25) von einem Referenzpunkt (0) ausgehend in mindestens einer Raumrichtung (x, -x) entlang der Erstreckungsachse (A) der Abtastteilung (25) abnimmt.

4. Positionsmesseinrichtung nach Anspruch 2 oder 3, **dadurch gekennzeichnet, dass** die Gitterkonstante ($d_A$) der Abtasteilung (25) ausgehend von dem Referenzpunkt (0) in zwei zueinander entgegengesetzten, jeweils entlang der Erstreckungsachse (A) der Abtastteilung (25) erstreckten Richtungen (x, -x) abnimmt.

5. Positionsmesseinrichtung nach Anspruch 4, **dadurch gekennzeichnet, dass** die Abnahme entlang der beiden entgegengesetzten Richtungen (x, -x) symmetrisch bezüglich des Referenzpunktes (0) erfolgt.

6. Positionsmesseinrichtung nach einem der vorhergehenden Ansprüche, **dadurch gekennzeichnet, dass** die ortsabhängige Gitterkonstante ($d_A$) der Abtastteilung (25) bestimmt ist durch die Ortsabhängigkeit der Gitterphase der Abtastteilung (25), welche sich aus der auf die Erstreckungsachse (A) der Abtastteilung (25) projizierten ortsabhängigen Gitterphase der Messteilung (15) und einer vorgebbaren ortsabhängigen Phase eines gewünschten Streifenmusters der elektromagnetischen Strahlung an der Detektorfläche (31) ergibt.

7. Positionsmesseinrichtung nach Anspruch 6, **dadurch gekennzeichnet, dass** die ortsabhängige Gitterkonstante ($d_A$ (x)) der Abtastteilung (25) als Inverses der Frequenzverteilung

$$g_A(x) := \frac{1}{2 \cdot \pi} \cdot \frac{d}{dx} \phi(x)$$

gegeben ist, wobei ϕ(x) die ortsabhängige Phase an der Abtastteilung (25) bezeichnet.

8. Positionsmesseinrichtung nach einem der vorhergehenden Ansprüche, **dadurch gekennzeichnet, dass** der Detektor (3) eine ebene, im Wesentlichen zweidimensionale Detektorfläche (31) aufweist.

9. Positionsmesseinrichtung nach einem der vorhergehenden Ansprüche, **dadurch gekennzeichnet, dass** die Messteilung (15) und/oder die Abtastteilung (25) durch ein Amplitudengitter gebildet werden.

10. Positionsmesseinrichtung nach einem der vorhergehenden Ansprüche, **dadurch gekennzeichnet, dass** die Abtastteilung (25) durch ein MAP-Gitter gebildet wird.

11. Positionsmesseinrichtung nach Anspruch 7 und Anspruch 10, **dadurch gekennzeichnet, dass** sich die ortsabhängige Phase der Abtastteilung ergibt als Summe der auf die Erstreckungsachse (A) der Abtastteilung (25) projizierten ortsabhängigen Gitterphase der Messteilung (15) und einer vorgebbaren ortsabhängigen Phase eines Streifenmusters der elektromagnetischen Strahlung an der Detektorfläche (31).

12. Positionsmesseinrichtung nach einem der Ansprüche 1 bis 8, **dadurch gekennzeichnet, dass** die Abtastteilung (25) durch ein Phasengitter gebildet wird.

13. Positionsmesseinrichtung nach einem der vorhergehenden Ansprüche, **dadurch gekennzeichnet, dass** die Messteilung (15) der Maßverkörperung (1) mittels elektromagnetischer Strahlung in Form kollimierten Lichtes abgetastet wird.

**14.** Positionsmesseinrichtung nach einem der vorhergehenden Ansprüche, **dadurch gekennzeichnet, dass** die Messteilung (15) auf einem ringartig auf einer drehbaren Trommel (T) angeordneten Maßband (1) vorgesehen ist.

**15.** Positionsmesseinrichtung nach einem der Ansprüche 1 bis 13, **dadurch gekennzeichnet, dass** die Messteilung (15) unmittelbar auf einer Oberfläche einer drehbaren Trommel (T) vorgesehen ist.

**Claims**

**1.** A position measuring device comprising

- a measuring graduation provided on an encircling material measure,
- a scanning unit for optically scanning the measuring graduation by means of electromagnetic radiation,
- a scanning plate of the scanning unit comprising a scanning graduation extending along an axis and being formed by a scanning grating, which is arranged in the light path of the electromagnetic radiation, which is used for scanning the measuring graduation, so that said scanning plate interacts with the scanning graduation as well as with the measuring graduation and
- a detector of the scanning unit, the detector surface of which serves the purpose of detecting the intensity distribution of the electromagnetic radiation, which is present as a stripe pattern after interaction with the scanning graduation and with the measuring graduation so as to detect movements of the material measure relative to the scanning unit, wherein the detector surface (31) of the detector (3) is formed by means of a periodic configuration of detector areas, which are arranged behind one another along a detector axis and the period ($P_D$) of which is matched with the period of the stripe pattern, for the detection of which the detector (3) is designed,

**characterized in**
**that** the grating constant ($d_A$) of the scanning graduation (25) along the direction of extension (A) of the scanning graduation (25) varies in such a manner that the distances, on which the phase of the stripe pattern, which is present at the detector surface (31), passes through a change by $2\pi$, are constant.

**2.** The position measuring device according to claim 1, **characterized in that** the grating constant ($d_A$) of the scanning graduation (25), starting at a reference point (0), varies in at least one spatial direction (x, -x) along the axis of extension (A) of the scanning graduation (25) according to a defined function.

**3.** The position measuring device according to claim 1 or 2, **characterized in that** the grating constant ($d_A$) of the scanning graduation (25), starting at a reference point (0), decreases in at least one spatial direction (x, -x) along the axis of extension (A) of the scanning graduation (25).

**4.** The position measuring device according to claim 2 or 3, **characterized in that** the grating constant ($d_A$) of the scanning graduation (25), starting at the reference point (0), decreases in two directions (x, -x), which are opposite relative to one another and each of which extend along the axis of extension (A) of the scanning graduation (25).

**5.** The position measuring device according to claim 4, **characterized in that** the decrease takes place along the two opposite directions (x, -x) symmetrically relative to the reference point (0).

**6.** The position measuring device according to one of the preceding claims, **characterized in that** the location-dependent grating constant ($d_A$) of the scanning graduation (25) is determined by the location dependence of the grating phase of the scanning graduation (25), which results from the location-dependent grating phase of the measuring graduation (15), which is projected onto the axis of extension (A) of the scanning graduation (25), and by a predeterminable location-dependent phase of a desired stripe pattern of the electromagnetic radiation at the detector surface (31).

**7.** The position measuring device according to claim 6, **characterized in that** the location-dependent grating constant ($d_A(x)$) of the scanning graduation (25) is defined as the inverse of the frequency distribution

$$g_A(x) := \frac{1}{2 \cdot \pi} \cdot \frac{d}{dx} \phi(x)$$

wherein $\Phi(x)$ characterizes the location-dependent phase at the scanning graduation (25).

8. The position measuring device according to one of the preceding claims, **characterized in that** the detector (3) encompasses a plane, substantially two-dimensional detector surface (31).

9. The position measuring device according to one of the preceding claims, **characterized in that** the measuring graduation (15) and/or the scanning graduation (25) are formed by means of an amplitude grating.

10. The position measuring device according to one of the preceding claims, **characterized in that** the scanning graduation (25) is formed by means of a MAP grating.

11. The position measuring device according to claim 7 and claim 10, **characterized in that** the location-dependent phase of the scanning graduation results as the sum of the location-dependent grating phase of the measuring graduation (15), which is projected onto the axis of extension (A) of the scanning graduation (25) and of a predeterminable location-dependent phase of a stripe pattern of the electromagnetic radiation at the detector surface (31).

12. The position measuring device according to one of claims 1 to 8, **characterized in that** the scanning graduation (25) is formed by means of a phase grating.

13. The position measuring device according to one of the preceding claims, **characterized in that** the measuring graduation (15) of the material measure (1) is scanned by means of electromagnetic radiation in the form of collimated light.

14. The position measuring device according to one of the preceding claims, **characterized in that** the measuring graduation (15) is provided on a measuring tape (1), which is arranged on a rotary drum (T) in a ring-like manner.

15. The position measuring device according to one of claims 1 to 13, **characterized in that** the measuring graduation (15) is provided directly on a surface of a rotary drum (T).

**Revendications**

1. Dispositif de mesure de position, avec

   - une graduation de mesure, prévue sur une mesure matérialisée circonférentielle du genre anneau,
   - une unité de balayage pour le balayage optique de la graduation de mesure au moyen d'un rayonnement électromagnétique,
   - une plaque de balayage de l'unité de balayage, avec une graduation de balayage formée par une grille de balayage étendue le long d'un axe et disposée dans la trajectoire des rayons du rayonnement électromagnétique utilisé pour le balayage de la graduation de mesure, de sorte que celui-ci se trouve en interaction aussi bien avec la graduation de balayage qu'avec la graduation de mesure, et
   - un détecteur de l'unité de balayage, dont la surface de détection sert à la détection de la répartition d'intensité du rayonnement électromagnétique, présentée comme modèle de bande après l'interaction avec la graduation de balayage et la graduation de mesure, pour détecter des mouvements de la mesure matérialisée par rapport à l'unité de balayage, dans lequel la surface de détection (31) du détecteur (3) est formée par une disposition périodique de zones de détection disposées les unes à la suite des autres le long d'un axe de détecteur et dont la période ($P_D$) est déterminée en fonction de la période du modèle de bande pour la détection duquel le détecteur (3) est conçu,

   **caractérisé en ce que**

la constante de grille ($d_A$) de la graduation de balayage (25) varie de telle manière le long de la direction d'extension (A) de la graduation de balayage (25), que les trajectoires, sur lesquelles la phase du modèle de bande disponible sur la surface de détection (31) parcourt une modification de 2n, sont constantes.

2. Dispositif de mesure de position selon la revendication 1, **caractérisé en ce que** la constante de grille ($d_A$) de la graduation de balayage (25) varie selon une fonction définie, à partir d'un point de référence (0), dans au moins une direction spatiale (x, -x) le long de l'axe d'extension (A) de la graduation de balayage (25).

3. Dispositif de mesure de position selon l'une des revendications 1 ou 2, **caractérisé en ce que** la constante de grille ($d_A$) de la graduation de balayage (25) diminue à partir d'un point de référence (0), dans au moins une direction spatiale (x, -x), le long de l'axe d'extension (A) de la graduation de balayage (25).

4. Dispositif de mesure de position selon l'une des revendications 2 ou 3, **caractérisé en ce que** la constante de grille ($d_A$) de la graduation de balayage (25) diminue à partir du point de référence (0), dans deux directions opposées (x, - x) s'étendant chacune le long de l'axe d'extension (A) de la graduation de balayage (25).

5. Dispositif de mesure de position selon la revendication 4, **caractérisé en ce que** la diminution le long des deux directions opposées (x, -x) a lieu de façon symétrique par rapport au point de référence (0).

6. Dispositif de mesure de position selon l'une des revendications précédentes, **caractérisé en ce que** la constante de grille ($d_A$) de la graduation de balayage (25), liée au lieu, est déterminée par la dépendance spatiale de la phase de grille de la graduation de balayage (25), qui est calculée à partir de la phase de grille de la graduation de mesure (15), liée au lieu, projetée sur l'axe d'extension (A) de la graduation de balayage (25), et d'une phase, liée au lieu et susceptible d'être déterminée, d'un modèle de bande au choix du rayonnement électromagnétique sur la surface de détection (31).

7. Dispositif de mesure de position selon la revendication 6, **caractérisé en ce que** la constante de grille ($d_A$ (x)), liée au lieu, de la graduation de balayage (25) est donnée comme l'inverse de la répartition de fréquence

$$g_A(x) := \frac{1}{2 \cdot \pi} \cdot \frac{d}{dx} \phi(x)$$

où $\Phi(x)$ désigne la phase liée au lieu sur la graduation de balayage (25).

8. Dispositif de mesure de position selon l'une des revendications précédentes, **caractérisé en ce que** le détecteur (3) comporte une surface de détection (31) plane, essentiellement bidimensionnelle.

9. Dispositif de mesure de position selon l'une des revendications précédentes, **caractérisé en ce que** la graduation de mesure (15) et/ou la graduation de balayage (25) est formée par une grille d'amplitude.

10. Dispositif de mesure de position selon l'une des revendications précédentes, **caractérisé en ce que** la graduation de balayage (25) est formée par une grille MAP.

11. Dispositif de mesure de position selon la revendication 7 et la revendication 10, **caractérisé en ce que** la phase de la graduation de balayage, liée au lieu, est fournie comme la somme de la phase de grille de la graduation de mesure (15), liée au lieu et projetée sur l'axe d'extension (A) de la graduation de balayage (25), et d'une phase, liée au lieu et susceptible d'être prédéterminée, d'un modèle de bande du rayonnement électromagnétique sur la surface de détection (31).

12. Dispositif de mesure de position selon l'une des revendications 1 à 8, **caractérisé en ce que** la graduation de balayage (25) est formée par une grille de phase.

13. Dispositif de mesure de position selon l'une des revendications précédentes, **caractérisé en ce que** la graduation de mesure (15) de la mesure matérialisée (1) est balayée au moyen d'un rayonnement électromagnétique sous la forme d'une lumière collimatée.

**14.** Dispositif de mesure de position selon l'une des revendications précédentes, **caractérisé en ce que** la graduation de mesure (15) est prévue sur une bande de mesure (1) disposée à la façon d'un anneau sur un tambour rotatif (T).

**15.** Dispositif de mesure de position selon l'une des revendications 1 à 13, **caractérisé en ce que** la graduation de mesure (15) est prévue directement sur une surface d'un tambour rotatif (T).

# FIG 1A

# FIG 1B

FIG 2

EP 1 617 182 B1

# FIG 3A

EP 1 617 182 B1

# FIG 3B

EP 1 617 182 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1081457 A2
- EP 1028309 A1
- EP 0754933 B1